Europäisches Patentamt

(19) European Patent Office

Office européen des brevets

(11) **EP 1 000 900 B1**

(12) **EUROPEAN PATENT SPECIFICATION**

(45) Date of publication and mention
of the grant of the patent:
**23.04.2003 Bulletin 2003/17**

(51) Int Cl.[7]: **C01B 3/04**, B01D 53/86

(21) Application number: **99308547.1**

(22) Date of filing: **28.10.1999**

(54) **Catalytic conversion of ammonia**

Katalytische Umsetzung von Ammoniak

Conversion catalytique de l' ammoniac

(84) Designated Contracting States:
**DE FR GB IT SE**

(30) Priority: **30.10.1998 GB 9823879**

(43) Date of publication of application:
**17.05.2000 Bulletin 2000/20**

(73) Proprietor: **University of Reading
Reading RG6 6AH, Berkshire (GB)**

(72) Inventors:
• **Burch, Robert
Antrim BT41 1PB (IE)**
• **Southward, Barry William Luke
Ormeau, Belfast BT7 3HD (IE)**

(74) Representative: **Dargavel, Laurence Peter
ALSTOM Intellectual Property Dept.
PO Box 30
Lichfield Road
Stafford ST17 4LN (GB)**

(56) References cited:
DE-A- 4 020 914          US-A- 4 003 978
US-A- 5 139 756

• PATENT ABSTRACTS OF JAPAN vol. 1998, no.
14, 31 December 1998 (1998-12-31) & JP 10
249165 A (ICHIKAWA MASARU;KURITA WATER
IND LTD), 22 September 1998 (1998-09-22)
• PATENT ABSTRACTS OF JAPAN vol. 1998, no.
09, 31 July 1998 (1998-07-31) & JP 10 085557 A
(NIPPON SHOKUBAI CO LTD), 7 April 1998
(1998-04-07)

**Description**

This invention relates to the catalytic conversion of ammonia. More particularly, this invention relates to the selective conversion of ammonia to dinitrogen from an ammonia-containing gas stream such as gasified biomass or any comparable gasification gas, e.g. from coal or from any gas stream containing $NH_3$ together with CO or $H_2$ or a mixture of CO and $H_2$.

Renewable energy sources will be of increasing importance for power generation in the future. Attempts have been made to use biomass-derived fuels for combined heat and power generation. However, gasified biomass contains significant quantities of $NH_3$ (e.g. 600-4000 ppm) in addition to substantial amounts of CO (9.8-17.2%), $H_2$ (9.8-13.2%) as well as $CH_4$, $CO_2$, $H_2O$ and $N_2$. The $NH_3$ represents a particular problem since its combustion in the gas phase results in the formation of an equivalent amount of oxides of nitrogen i.e. NO, $NO_2$ (represented hereinafter as $NO_x$) and $N_2O$ which are environmentally harmful.

Catalytic conversion of ammonia proceeds via the reaction:

$$2NH_3 + 3/2O_2 \rightarrow N_2 + 3H_2O$$

However this selective reaction is in competition with various alternative oxidation processes which generally result in the formation of $NO_x$ or $N_2O$ e.g:

$$2NH_3 + 7/2O_2 \rightarrow 2NO_2 + 3H_2O$$

$$2NH_3 + 5/2O_2 \rightarrow 2NO + 3H_2O$$

$$2NH_3 + 2O_2 \rightarrow N_2O + 3H_2O$$

Previously, efforts to develop a method for the selective conversion of ammonia have concentrated on avoiding $NO_x$ and $N_2O$ formation. For example, EP 0 706 816 A1 describes a process for the catalytic low temperature oxidation of ammonia to nitrogen using a refractory oxide supported sulphated transition metal catalyst with a platinum group metal promoter. British Patent No 1 481 985 describes a process for selective oxidation of ammonia present in air using oxide supported platinum metals (Pt, Ru, Pd, Rh, Ir, Os) prepared by rapid (maximum 2 hrs) high temperature calcination. Again these materials are active, but only at low temperatures, 180-250°C at low space velocity ca. 9000 $h^{-1}$. US Patent No 5 139 756 discloses a process for decomposing ammonia vapour recovered from coke oven gas in the presence of an oxygen source such as air and a supported catalyst comprising copper oxide and vanadium oxide which suppress generation of $NO_x$.

Japanese Patent Publication No. 10249165 (Patents Abstracts of Japan AN 970371) describes the processing of an ammonia containing gas by treatment at a low temperature in the presence of a Group VIII metal and/or group 1B metal catalyst to convert the ammonia to gaseous nitrogen. In this process ammonia-containing gas is contacted with oxygen and hydrogen, the oxygen being present in at least a stoichiometric amount, to convert the ammonia into harmless nitrogen gas.

We have now surprisingly found that by using a particular catalyst and controlled reaction conditions, specifically operating with $O_2$ lean combustion conditions, it is possible to remove any $NO_x$ or $N_2O$ formed by further reaction with specific other components in the fuel gases e.g. as represented by the following reactions:

$$2NO + 2CO \rightarrow 2CO_2 + N_2$$

$$2NO + 2H_2 \rightarrow 2H_2O + N_2$$

Such reactions rely on the selective combustion of $NH_3$ in preference to the complete combustion of oxygen by other components of the fuel such as CO and/or $H_2$. This selective combustion of $NH_3$ with respect to CO and/or $H_2$ under $O_2$ lean conditions creates the conditions necessary for the selective catalytic reduction with CO and/or $H_2$ of any $NO_x$ or $N_2O$ formed. These requirements are attained by the use of specific catalytic materials working within $O_2$ lean combustion conditions. The $O_2$ concentration level is controlled to provide reducing conditions after the complete consumption of all the $O_2$ to facilitate the reduction of $NO_x/N_2O$ by fuel components such as CO or $H_2$.

We have now found that a particular class of materials displays high activity and selectivity for the conversion of ammonia to nitrogen and that supported precious metal catalysts which have previously been found to display high selectivity to $NO_x$ and low selectivity to nitrogen (Il'Chenko and Golodets J. Catal, v39, pp57-72 and pp73-86, 1975), can exhibit near quantitative conversion of $NH_3$ to nitrogen.

The present invention therefore provides a process for the selective conversion of ammonia in a gas containing $NH_3$ together with CO, $H_2$ or a mixture of CO and $H_2$ which comprises contacting the ammonia-containing gas with a supported catalyst, the catalyst preferably being selected from Rh, Pt, Pd, Ir, Os, Ru, Ag and mixtures thereof in the form of the metal or oxide thereof, the contacting being effected at a temperature of at least $200°C$ and in the presence of a predetermined and controlled amount of oxygen such that nitrogen oxides formed in a first reaction stage are reduced by reaction with CO and/or $H_2$ in a second reaction stage, and recovering the resulting dinitrogen enriched gas.

The level of oxygen introduced into the reaction is selected according to the composition of the ammonia-containing gas and is controlled to allow, in a first stage, conversion of all the ammonia to $NO_x$, $N_2O$ and/or $N_2$ and, in a second stage, reduction of any $NO_x$ and $N_2O$ to $N_2$ with the excess of CO and/or $H_2$ in the gas stream. Generally the level of oxygen will be 0.05 to 10%, preferably 0.1 to 5%, most preferably 0.2 to 2.5%.

The catalyst used in the process according to the invention preferably comprises, as catalytically active component, a precious metal selected from Rh, Pt, Pd, Ir, Os, Ru, Ag and mixtures thereof in the form of the metal or an oxide thereof.

Suitable catalyst supports include refractory oxide supports such as $Al_2O_3$, $SiO_2$ or $ZrO_2$, $CeO_2$-$ZrO_2$, $TiO_2$ or $V_2O_5$-$TiO_2$ or promoted variants or mixtures thereof. Other possible supports include inorganic framework materials such as zeolites or zeotypes eg HY or HZSM5.

The term zeotype is used with its normal meaning to identify structures conforming to those displayed by zeolites, while not necessarily possessing the same elemental composition e.g. those derived from alumina and phosphates; silica and phosphates; and metal substituted variants of these two classes as well as silica analogues.

For industrial application, the catalysts will typically comprise the active metal component at levels of 0.2 - 20% by mass supported on the carrier.

The catalysts are preferably used in the form of rings, pellets, tablets, monolithic or mesh structures or in the form of powder.

Conventional methods such as co-precipitation, rapid precipitation or various forms of impregnation may be used to produce the active form of the catalyst.

The reaction according to the invention is carried out at a temperature of at least $200°C$, preferably 400 - $1000°C$, most preferably 500 - $900°C$.

In a preferred embodiment of the invention the process is carried out in the presence of a Rh-containing catalyst, preferably containing 2% Rh, on an $Al_2O_3$ support material with $CeO_2$ as promoter, preferably in an amount of 10%, and optionally containing 4% $La_2O_3$. An ammonia-containing feed stream (0.275% $O_2$, 1050 ppm $NH_3$, 5.35% CO and 3.56% $H_2$) was contacted with the catalyst at a GHSV of 240,000 $h^{-1}$ resulting in high conversion to $N_2$ at $600°C$ and almost complete conversion at $700°C$.

The process is particularly suitable for the selective conversion of ammonia contained in gasified biomass streams containing, for example, up to 10,000 ppm ammonia.

The decomposed gas which is recovered from the process is enriched in dinitrogen and has a low $NO_x/N_2O$ content.

The invention is illustrated by reference to the following Examples. In these Examples the percentages specified in relation to the catalyst are by weight based on the total weight of the supported catalyst.

In the accompanying Figures:

Figure 1 represents the progress of a conventional oxidation of $NH_3$ where the symbols have the following meaning:

| | |
|---|---|
| □ | $N_2$ |
| ▽ | $N_2O$ |
| △ | NO |
| ○ | $NH_3$ |

Figure 2 represents the progress of an oxidation reaction according to the present invention where the symbols have the following meaning:

| | |
|---|---|
| □ | CO |

(continued)

| ▽ | $H_2$ |
|---|---|
| ○ | $NH_3$ |

## Catalyst Preparation

A 2% Rh $\gamma$-Al$_2$O$_3$ catalyst was prepared by incipient wetness impregnation. The dried Al$_2$O$_3$ was impregnated with Rh(III) nitrate and dried at room temperature for 24h then at 120°C for a further 24h prior to calcination at 700°C in flowing O$_2$/He for 12h. This catalyst was employed in the following Comparative Example 1 and Example 1.

## Comparative Example 1

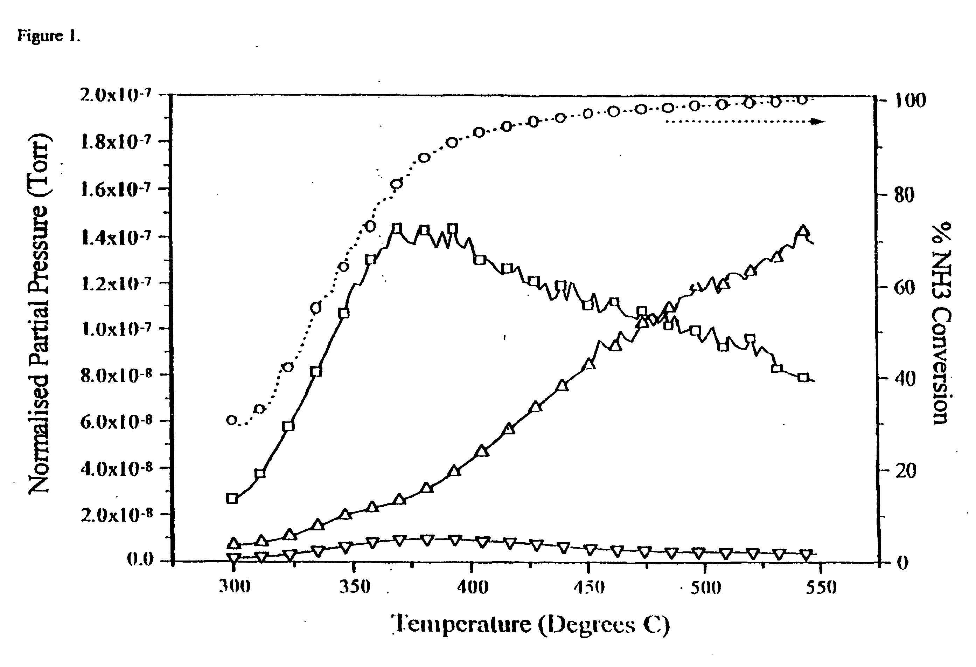

A conventional oxidation was performed using the catalyst above described on an ammonia-containing gas stream (1000ppm NH$_3$) in the presence of 18% O$_2$, the balance being He. The results are graphically illustrated in Figure 1. The Figure shows that, initially, conversion of NH$_3$ is low but with a high selectivity to N$_2$. However, whilst both conversion and N$_2$ yields increase with temperature, N$_2$O and NO are also formed. N$_2$O and N$_2$ concentrations peak at about 375°C before decreasing, whilst NO formation increases steadily with temperature to become the major product at T>500°C. This Figure illustrates the difficulty of selectively converting NH$_3$ to N$_2$.

## Example 1

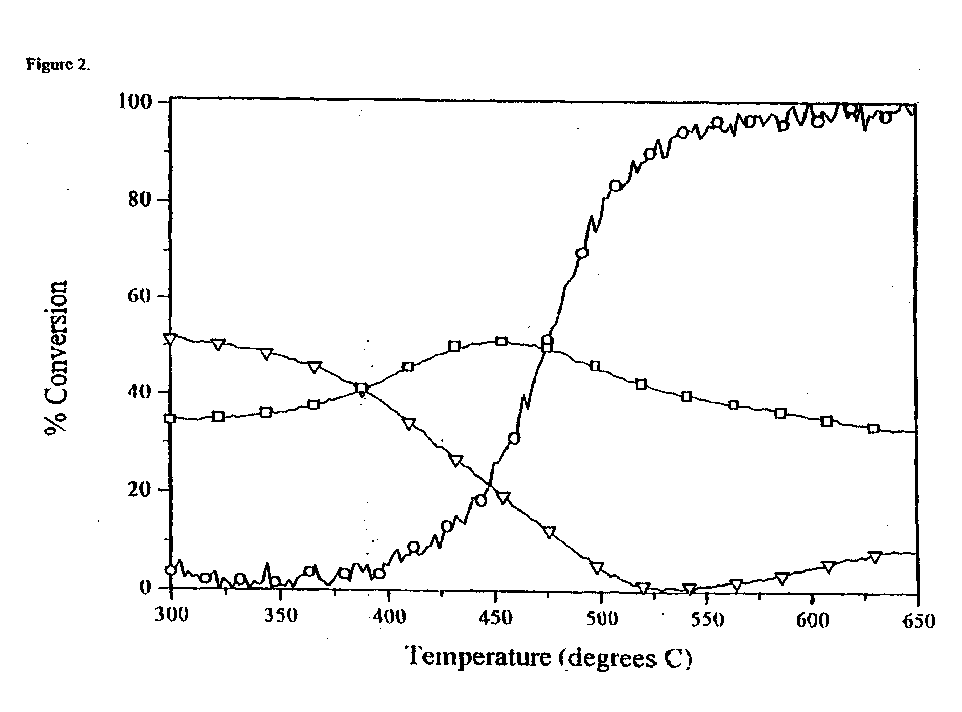

The catalyst previously described was used for the selective conversion of ammonia contained in a biomass-derived fuel (1000ppm NH$_3$). 55mg of the catalyst were heated in a tubular furnace and reacted with a gas of composition 1000ppm NH$_3$, 0.275% O$_2$, 1.02% CO, 0.68% H$_2$, balance He, at GHSV = 240,000 h$^{-1}$. The results are graphically illustrated in Figure 2.

This Figure shows that, at low temperatures, NH$_3$ does not react but H$_2$ and CO are very reactive. In contrast, at higher temperatures the NH$_3$ begins to react and at about 550°C the conversion of NH$_3$ is effectively complete whereas the combustion of H$_2$ has dropped close to zero.

The overall levels of oxidation are limited by controlling the O$_2$ concentration. This example shows that the selective conversion of NH$_3$ to NO$_x$ in the presence of an excess of CO and H$_2$ has been achieved. The second stage of the process, that is the reduction by CO and/or H$_2$ of the NO$_x$ and/or N$_2$O formed in the first stage occurs sequentially within the same catalyst bed.

## Example 2

A 2% Rh - SiO$_2$ catalyst was prepared by incipient wetness impregnation. The silica employed was acid-washed (2M nitric acid at 70 - 80°C for 2h, followed by 5 times rinsing with hot deionised water) and dried at 120°C for 24h. It was then calcined in air (500°C) for 4hr prior to impregnation with Rh(III) nitrate and drying at room temperature for 24h then 120°C for a further 24h prior to calcination at 600°C in flowing O$_2$/He for 12h.

The catalyst was used for the selective conversion of ammonia contained in a biomass - derived fuel (1000ppm NH$_3$) under the conditions described in Example 1. The results were similar to those illustrated in Figure 2. It was found that, at low temperatures, NH$_3$ is not very reactive but at higher temperatures, (about 530°C) NH$_3$ begins to react rapidly and at about 600°C the conversion to N$_2$ is virtually complete while the combustion of H$_2$ has dropped to zero.

## Example 3

A 5% Rh - $\gamma$-Al$_2$O$_3$ catalyst was prepared as described for the catalyst used in Example 1.

The catalyst was used for the selective conversion of ammonia in a biomass-derived fuel (1000ppm NH$_3$) under the conditions described in Example 1. Similar results were obtained to those described in Example 1. The NH$_3$ was initially, at lower temperatures, not very reactive while H$_2$ and CO were reactive. The NH$_3$ began to react at T>500°C and was substantially completely converted to N$_2$ at about 650°C, while H$_2$ levels were close to zero at about 600°C.

## Example 4

A 0.3% Pt - $\gamma$-Al$_2$O$_3$ catalyst prepared by impregnation using chloroplatinic acid was calcined for 12h at 650°C in O$_2$/He.

The catalyst was used for the selective conversion of ammonia in a biomass-derived fuel (1000ppm $NH_3$) under the conditions described in Example 1.

The catalyst was exposed to a feed stream of $NH_3$ and $O_2$, in the absence of CO. Full conversion of $NH_3$ was observed with the formation of $N_2$ (345 ppm or 69% yield) and NO (310 ppm or 31% yield). Incomplete consumption of $O_2$ was recorded. After 350 s on line CO was introduced which resulted in the full consumption of all remaining $O_2$ and complete conversion of the NO previously observed to $N_2$. 100% conversion of $NH_3$ was maintained and the only reaction products after this point were $CO_2$, $H_2O$ and $N_2$.

## Example 5

A 1% Ir-γ-$Al_2O_3$ was prepared by wet impregnation using $Ir(CH_3COCH=C(O)CH_3)_3$ precursor. This involved adding the dried support (24 h/120°C) to a solution of the Ir salt dissolved in acetone. The resulting slurry was left to stand for 3h with occasional stirring, followed by drying (120°C/4h) and calcination (550°C/4hr).

The resulting material was tested for its efficacy in $NH_3$ conversion from a simulated biomass stream (1100 ppm $NH_3$, 1.2% CO, 0.8% $H_2$, 0.4% $O_2$). The results are shown in Table 1.

## Example 6

A 1% Ir-$ZrO_2$ catalyst was prepared following the method detailed in Example 5, using $ZrO_2$ as the support and tested under conditions given in Example 5. The results are shown in Table 1.

## Example 7

A 2% Rh-$Al_2O_3$ catalyst, as described for use in Example 1, was tested for the conversion of $NH_3$ in the feed stream (1000 ppm $NH_3$, 5.1% CO, 3.4% $H_2$, 0.5% $O_2$) at GHSV = 240,000 $h^{-1}$, with the results shown in Table 1.

Table 1

| Catalyst performance data for Examples 5 - 7. | | | | | |
|---|---|---|---|---|---|
| Example 5 | | Example 6 | | Example 7 | |
| Temperature °C | $NH_3 \rightarrow N_2$ 1%Ir-$Al_2O_3$ | Temperature °C | $NH_3 \rightarrow N_2$ 1%Ir-$ZrO_2$ | Temperature °C | $NH_3 \rightarrow N_2$ 8.5% CO/$H_2$ |
| 400 | 8.6 | 400 | 12.1 | 400 | 21.7 |
| 440 | 6.0 | 440 | 10.3 | 440 | 22.7 |
| 480 | 7.8 | 480 | 12.1 | 480 | 22.9 |
| 500 | 11.2 | 500 | 13.8 | 500 | 24.3 |
| 520 | 14.7 | 520 | 16.4 | 540 | 25.3 |
| 540 | 28.5 | 540 | 19.8 | 580 | 26.8 |
| 560 | 46.6 | 560 | 22.4 | 600 | 33.7 |
| 580 | 63.8 | 580 | 24.1 | 620 | 41.5 |
| 600 | 77.9 | 600 | 24.1 | 640 | 58.4 |
| 620 | 87.9 | 620 | 25.9 | 660 | 73.2 |
| 640 | 93.1 | 640 | 27.6 | 680 | 83.4 |
| 660 | 96.6 | 660 | 31.0 | 700 | 96.5 |
| 680 | 97.4 | 680 | 37.9 | 750 | 100 |
| 700 | 100 | 700 | 44.0 | | |
| 750 | 100 | 720 | 55.1 | | |
| | | 740 | 67.2 | | |
| | | 760 | 78.4 | | |
| | | 780 | 87.1 | | |
| | | 800 | 95.0 | | |

## Example 8

Rh-containing catalysts (a - j) were prepared following the general method described for the catalyst used in Example 1 and tested for $NH_3$ conversion in the feed stream (0.275% $O_2$, 1050 ppm $NH_3$, 5.35% CO and 3.56% $H_2$) at GHSV = 240,000 $h^{-1}$ with the results summarised in Table 2.

Table 2 -

| | | | %$N_2$@ 500°C | %$N_2$@ 600°C | %$N_2$@ 700°C | %$N_2$@ 800°C |
|---|---|---|---|---|---|---|
| | 8 | Catalyst | | | | |
| | a | 1% Rh - $Al_2O_3$ | 12.1 | 63.0 | 95.8 | 98.2 |
| | b | 1% Rh - 4% $CeO_2$ - $Al_2O_3$ | 16.4 | 73.3 | 98.2 | 100 |
| | c | 1% Rh - 4% $La_2O_3$ - $Al_2O_3$ | 14.9 | 65.5 | 98.0 | 100 |
| | d | 1% Rh - $ZrO_2$ | 10.3 | 50.0 | 90.9 | 98.2 |
| | e | 1% Rh - $CeO_2$-$ZrO_2$ | 11.9 | 84.5 | 99.4 | 100 |
| | f | 3% Rh - $CeO_2$-$ZrO_2$ | 13.8 | 53.8 | 93.3 | 100 |
| | g | 1% Rh - 4% $ZrO_2$-$Al_2O_3$ | 15.0 | 55.6 | 90.6 | 98.1 |
| | h | 2% Rh - $V_2O_5$-$TiO_2$ | 16.7 | 81.6 | 97.5 | 100 |
| | i | Rh-HY (ion exchanged)∗ | 10.4 | 84.6 | 98.6 | 100 |
| | j | Rh-HZSM5 (ion-exch)∗+ | 10.4 | 39.6 | 87.0 | 96.1 |

Table 2 - | Support effects on Catalytic Performance 1.

∗ CO/$H_2$ = 1.9% + GHSV = 440,000 $h^{-1}$

The data obtained corroborate the high activity and selectivity for Rh for the selective reaction but also reflect marked contributions of the support material to the performance of the catalyst. Hence while the $ZrO_2$ supported catalyst (d) was marginally less active than the Rh on pure $Al_2O_3$ (a), the 1% Rh $CeO_2$-$ZrO_2$ (e) was significantly more active. A beneficial effect of $CeO_2$ or $La_2O_3$ addition to $Al_2O_3$ (b) and (c) was also noted, while the use of $V_2O_5$-$TiO_2$ (h) as a support also resulted in an efficient catalyst. Finally the use of zeolitic supports (i) and (j) also proved successful with high $N_2$ yields even at comparatively high GHSVs.

## Example 9

A series of promoted 1 % Rh-containing catalyst (a - c) was made by the introduction of $CeO_2$ (ex $Ce(NO_3)_4$.x$H_2O$) to the $Al_2O_3$ prior to the introduction of the Rh, following the general impregnation method described in Example 1 and tested for $NH_3$ conversion in the feed stream (0.275% $O_2$, 1050 ppm $NH_3$, 5.35% CO and 3.56% $H_2$) at a GHSV = 240,000 $h^{-1}$ with the results summarised in Table 3.

Table 3 -

| | | | %$N_2$@ 500°C | %$N_2$@ 600°C | %$N_2$@ 700°C | %$N_2$@ 800°C |
|---|---|---|---|---|---|---|
| | 9 | Catalyst | | | | |
| | a | 1% Rh - $Al_2O_3$ | 12.1 | 63.0 | 95.8 | 98.2 |
| | b | 1% Rh - 4% $CeO_2$ - $Al_2O_3$ | 16.4 | 73.3 | 98.2 | 100 |
| | c | 1% Rh - 10% $CeO_2$ - $Al_2O_3$ | 12.3 | 75.6 | 99.4 | 100 |

Table 3 - | Support effects on Catalytic Performance 2.

The data obtained reflect a significant promotion of the material, related to the presence and concentration of the $CeO_2$, to selectively convert $NH_3$ to $N_2$.

## Example 10

A series of promoted 2% Rh-containing catalysts was made by the introduction of $CeO_2$ (ex $Ce(NO_3)_4$.x$H_2O$) to the $Al_2O_3$ prior to the introduction of the Rh, following the general impregnation method described in Example 1 and tested for $NH_3$ conversion in the feed stream (0.275% $O_2$, 1050 ppm $NH_3$, 5.35% CO and 3.56% $H_2$) at a GHSV = 240,000 $h^{-1}$ with the results summarised in Table 4.

Table 4 -

| Support Effects on Catalytic Performance 3. | | | | | |
|---|---|---|---|---|---|
| 10 | Catalyst | %$N_2$@ 500°C | %$N_2$@ 600°C | %$N_2$@ 700°C | %$N_2$@ 800°C |
| a | 2% Rh - $Al_2O_3$ | 10.5 | 68.5 | 97.1 | 100 |
| b | 2% Rh - 4% $CeO_2$ - $Al_2O_3$ | 11.5 | 79.1 | 98.5 | 100 |
| c | 2% Rh - 10% $CeO_2$ - $Al_2O_3$ | 12.3 | 84.1 | 99.7 | 100 |

The data obtained further illustrate a significant promotion of the material, related to presence and concentration of the $CeO_2$, to selectively convert $NH_3$ to $N_2$. The effect is further enhanced by the increased concentration of Rh within the materials of this Example as compared with Examples 9(a) to 9(c).

## Example 11

A 2 % Rh-containing catalyst was made by the impregnation of a commercially available monolith washcoat (4% $La_2O_3$ stabilised $Al_2O_3$) following the method described for the preparation of the catalyst used in Example 1 and tested for $NH_3$ conversation in the feed stream (0.275% $O_2$, 1050 ppm $NH_3$, CO/$H_2$ as indicated) at a GHSV = 240,000 h$^{-1}$ with the results summarised in Table 5.

The CO/$H_2$ is provided from a 60:40 cylinder. Therefore CO/$H_2$ of 8.9% equals 5.35% CO+ 3.56% $H_2$ and CO/$H_2$ of 16.7% equals 10.02% CO and 6.68% $H_2$.

Table 5 -

| Effect of CO/$H_2$ on the Catalytic Performance of 2% Rh-4% $La_2O_3$ - $Al_2O_3$. | | | | | |
|---|---|---|---|---|---|
| 11 | CO/$H_2$% | %$N_2$@ 500°C | %$N_2$@ 600°C | %$N_2$@ 700°C | %$N_2$@ 800°C |
| a | 8.9 | 11.5 | 68.9 | 97.7 | 100 |
| b | 16.7 | 13.2 | 37.1 | 93.2 | 99.9 |

These data confirm the efficacy of the material for the selective reaction of $NH_3$ over a wide range of CO/$H_2$ levels.

## Example 12

A 2% Rh-containing catalyst was made by the impregnation of a commercially available monolith washcoat (4% $La_2O_3$ stabilised $Al_2O_3$) following the method described for the catalyst used in Example 1. A further sample was produced by addition of 10% $CeO_2$ (ex Ce ($NO_3$).x$H_2$O) prior to addition of the Rh following the method detailed in Examples 1, 9 and 10, and tested for $NH_3$ conversion in the feed stream ($O_2$ as indicated, 1050 ppm $NH_3$, CO/$H_2$ provided from a 60:40 cylinder as indicated) at a GHSV = 240,000 h$^{-1}$ with the results summarised in Table 6.

Table 6 -

| Effect $O_2$ on 2% Rh-4%$La_2O_3$-$Al_2O_3$ and *2% Rh-10% $CeO_2$- 4%$La_2O_3$-$Al_2O_3$ | | | | | | |
|---|---|---|---|---|---|---|
| $O_2$% | | CO/$H_2$ | %$N_2$@ 500°C | %$N_2$@ 600°C | %$N_2$@ 700°C | %$N_2$@ 800°C |
| a | 0.275 | 8.9% | 5.5 | 68.9 | 97.7 | 100 |
| b | 5.0 | 8.9% | 48.5 | 77.4 | 95.0 | 99.5 |
| c | *0.275 | 8.9% | 8.9 | 78 1 | 98.3 | 100 |
| d | *2.0% | 8.9% | 45.1 | 83.3 | 95.8 | 100 |
| e | *5.0% | 16.9% | 57.9 | 86.6 | 95.8 | 99.7 |

These data confirm the efficacy of the material for the selective reaction of $NH_3$ over a wide range of CO/$H_2$ levels and again illustrate the beneficial effects of the presence of both $CeO_2$ and $La_2O_3$ upon the performance of the catalytic material.

### Example 13

A 2% $Rh-Al_2O_3$ catalyst as used in Example 1 and a 2% Rh - 10% $CeO_2$ - $Al_2O_3$ catalyst as described in Example 10 were examined to confirm the efficacy of the materials for the selective reaction of 1050 ppm $NH_3$ over an extended reaction period at 700°C. The results are summarised in Table 7.

Table 7 -

| Lifetime performance of a-2% $Rh-Al_2O_3$ and b-*2% $Rh$-10% $CeO_2$-$Al_2O_3$. | | | | |
|---|---|---|---|---|
| Catalyst | $O_2$:$CO/H_2$ : $H_2O$ (%) | % $N_2$ @ 1h | % $N_2$ @ 2.5h | % $N_2$ @ 5h |
| a | 0.275 : 1.7 : 0 | 98.3 | 97.5 | 96.6 |
| b | 0.275 : 8.9 : 2.5 | 100 | 100 | 99.8 |

These data confirm the suitability of the materials for extended operation with little or no loss of performance.

### Claims

1. A process for the selective conversion of ammonia in a gas containing $NH_3$ together with CO or $H_2$ or a mixture of CO and $H_2$ which comprises (1) contacting the ammonia-containing gas with a supported catalyst, the contacting being effected at a temperature of at least 200°C and in the presence of a predetermined and controlled amount of oxygen such that nitrogen oxides formed in a first reaction stage are reduced by reaction with CO and/or $H_2$ in a second reaction stage; and (2) recovering the resulting dinitrogen enriched gas.

2. A process according to claim 1, wherein the active component of the catalyst is selected from Rh, Pt, Ir, Os, Pd, Ru, Ag and mixtures thereof in the form of the metal or oxide thereof.

3. A process according to claim 1 or 2, wherein the contacting is effected in the presence of 0.05 to 10% oxygen.

4. A process according to claim 3, wherein the contacting is effected in the presence of 0.2 to 2.5% oxygen.

5. A process according to any of claims 1 to 4, wherein the support for the active component of catalyst is a refractory oxide, zeolite or zeotype.

6. A process according to claim 5, wherein the refractory oxide is $Al_2O_3$, $ZrO_2$, $CeO_2$-$ZrO_2$, $SiO_2$, $TiO_2$ or $V_2O_5$-$TiO_2$.

7. A process according to any of claims 2 to 6, wherein the active component of the catalyst is Rh, Ir, Pt or an oxide thereof.

8. A process according to any of claims 1 to 7, wherein the catalyst comprises 0.2 to 20% by weight of active catalyst component on the support.

9. A process according to any of claims 1 to 8, wherein the ammonia-containing gas comprises up to 10,000ppm ammonia.

10. A process according to any of claims 1 to 9, wherein the temperature is in the range of 500°C to 900°C.

### Patentansprüche

1. Verfahren zur selektiven Umsetzung von Ammoniak in einem $NH_3$ zusammen mit CO oder $H_2$ oder einer Mischung von CO und $H_2$ enthaltenden Gas, welches beinhaltet (1) das In-Kontakt-Bringen des Ammoniak enthaltenden Gases mit einem auf einen Träger aufgebrachten Katalysator, wobei der Kontaktvorgang bei einer Temperatur von mindestens 200°C und in Gegenwart einer bestimmten und gesteuerten Menge von Sauerstoff erfolgt, so dass Stickstoffoxide, die in einem ersten Reaktionsschritt gebildet werden, durch Reaktion mit CO und/oder $H_2$ in einem zweiten Reaktionsschritt reduziert werden; und (2) Rückgewinnung des erhaltenen, mit Distickstoff angereicherten Gases.

**2.** Verfahren nach Anspruch 1, wobei die aktive Komponente des Katalysators aus Rh, Pt, Ir, Os, Pd, Ru, Ag und Mischungen aus diesen in Form ihrer Metalle oder Oxide ausgewählt ist.

**3.** Verfahren nach Anspruch 1 oder 2, wobei das In-Kontakt-Bringen in Gegenwart von 0,05 bis 10% Sauerstoff erfolgt.

**4.** Verfahren nach Anspruch 3, wobei das In-Kontakt-Bringen in Gegenwart von 0,2 bis 2,5% Sauerstoff erfolgt.

**5.** Verfahren nach einem der Ansprüche 1 bis 4, wobei der Träger für die aktive Komponente des Katalysators ein feuerbeständiges Oxid, Zeolith oder Zeotyp ist.

**6.** Verfahren nach Anspruch 5, wobei das feuerbeständige Oxid $Al_2O_3$, $ZrO_2$, $CeO_2$-$ZrO_2$, $SiO_2$, $TiO_2$ oder $V_2O_5$-$TiO_2$ ist.

**7.** Verfahren nach einem der Ansprüche 2 bis 6, wobei die aktive Komponente des Katalysators Rh, Ir, Pt oder eines ihrer Oxide ist.

**8.** Verfahren nach einem der Ansprüche 1 bis 7, wobei der Katalysator 0,2 to 20 Gew.-% einer aktiven Katalysatorkomponente auf dem Träger enthält.

**9.** Verfahren nach einem der Ansprüche 1 bis 8, wobei das Ammoniak enthaltende Gas bis zu 10000 ppm Ammoniak enthält.

**10.** Verfahren nach einem der Ansprüche 1 bis 9, wobei die Temperatur im Bereich von 500°C bis 900°C liegt.

**Revendications**

**1.** Procédé pour la conversion sélective de l'ammoniac dans un gaz contenant du $NH_3$ ainsi que du CO ou du $H_2$ ou un mélange de CO et de $H_2$ qui comprend (1) la mise en contact du gaz contenant de l'ammoniac avec un catalyseur supporté, la mise en contact étant effectuée à une température d'au moins 200°C et en présence d'une quantité prédéterminée et contrôlée d'oxygène telle que les oxydes d'azote formés dans une première étape de la réaction sont réduits par réaction avec du CO et/ou du $H_2$ dans une seconde étape de la réaction ; et (2) récupérer le gaz enrichi en diazote résultant.

**2.** Procédé selon la revendication 1, dans lequel le composant actif du catalyseur est sélectionné parmi Rh, Pt, Ir, Os, Pd, Ru, Ag et des mélanges de ces composants sous la forme de métal ou d'oxyde de ceux-ci.

**3.** Procédé selon la revendication 1 ou 2, dans lequel la mise en contact est effectuée en présence de 0,05 à 10% d'oxygène.

**4.** Procédé selon la revendication 3, dans lequel la mise en contact est effectuée en présence de 0,2 à 2,5% d'oxygène.

**5.** Procédé selon l'une quelconque des revendications 1 à 4, dans lequel le support pour le composant actif du catalyseur est un oxyde réfractaire, une zéolite ou un zéotype.

**6.** Procédé selon la revendication 5, dans lequel l'oxyde réfractaire est $Al_2O_3$, $ZrO_2$, $CeO_2$-$ZrO_2$, $SiO_2$, $TiO_2$ ou $V_2O_5$-$TiO_2$.

**7.** Procédé selon l'une quelconque des revendications 2 à 6, dans lequel le composant actif du catalyseur est Rh, Ir, Pt ou un oxyde de ceux-ci.

**8.** Procédé selon l'une quelconque des revendications 1 à 7, dans lequel le catalyseur comprend 0,2 à 20% en poids de composant actif de catalyseur sur le support.

**9.** Procédé selon l'une quelconque des revendications 1 à 8, dans lequel le gaz contenant de l'ammoniac comprend jusqu'à 10 000 ppm d'ammoniac.

**10.** Procédé selon l'une quelconque des revendications 1 à 9, dans lequel la température est dans l'intervalle de 500°C à 900°C.

Figure 1.

Figure 2.

% Conversion

Temperature (degrees C)